# FASCICULE DE BREVET EUROPEEN

(11) **EP 4 077 016 B1**
(45) Date de publication et mention de la délivrance du brevet: **03.07.2024**
(21) Numéro de dépôt: 20845410.8
(22) Date de dépôt: 14.12.2020
(51) Int. Cl.: B60K 35/00

(54) **SYSTEME ET PROCEDE D'ASSISTANCE VISUELLE A UN INDIVIDU SOUFFRANT DE CINETOSE**
SYSTEM UND VERFAHREN ZUR VISUELLEN UNTERSTÜTZUNG EINES INDIVIDUUMS, DAS AN REISEKRANKHEIT LEIDET
SYSTEM AND METHOD FOR PROVIDING VISUAL ASSISTANCE TO AN INDIVIDUAL SUFFERING FROM MOTION SICKNESS

(30) Priorité: 16.12.2019 FR 1914547
(43) Date de publication de la demande: 26.10.2022
(73) Titulaire: Orange, 92130 Issy-les-Moulineaux (FR)
(72) Inventeur: ESNAULT, Régis, 92326 CHÂTILLON CEDEX (FR); CARTIGNY, Jean, 92326 CHÂTILLON CEDEX (FR); GREGOIRE, Christian, 92326 CHÂTILLON CEDEX (FR)
(74) Mandataire: Plasseraud IP
(86) Numéro de dépôt international: PCT/FR2020/052413
(87) Numéro de publication internationale: WO 2021/123584

(56) Documents cités:
- DE-A1-102014 019 579
- DE-A1-102014 112 077
- DE-A1-102017 207 788
- DE-A1-102017 208 881
- KR-A- 20180 025 540
- US-A1- 2019 083 739

## Description

### Domaine technique

Le domaine de l'invention se rapporte à l'assistance visuelle d'un individu souffrant du mal des transports, connu également sous le terme « cinétose ».

Le système et le procédé d'assistance visuelle visés par la présente invention sont notamment destinés à un individu, occupant d'un véhicule, lorsque son attention visuelle se porte sur un élément immobile dans le référentiel du véhicule, l'écran de son téléphone ou de sa tablette numérique par exemple.

### Technique antérieure

On estime aujourd'hui que près d'une personne sur trois souffre de cinétose, plus communément connue sous le nom de « mal des transports ».

La cinétose se traduit par un ensemble de symptômes survenant lorsque la personne atteinte de ce mal effectue un déplacement à bord d'un véhicule, que ce soit en automobile, en train, en aéronef ou en bateau. Ces symptômes peuvent être, par exemple, une sensation d'inconfort, des nausées, des vertiges, de la fatigue ou encore des maux de tête.

La cinétose est causée par des informations sensorielles contradictoires. En particulier, la cinétose est provoquée par une réponse inadaptée du cerveau à la réception d'informations visuelles et d'informations fournies par l'oreille interne au cours d'un trajet à bord d'un véhicule.

En effet, lorsque l'attention de l'individu est focalisé sur un élément visuel immobile dans le référentiel du véhicule, typiquement l'écran d'un téléphone ou d'une tablette numérique, les yeux ne perçoivent pas le mouvement puisque cet élément visuel est immobile par rapport à l'individu. En revanche, l'oreille interne peut, si les mouvements du véhicule s'intensifient, percevoir le mouvement et transmettre au cerveau une information contraire.

Actuellement, il existe des traitements médicamenteux permettant d'atténuer les symptômes liés à la cinétose. Il est également connu que la répétition des voyages permet sur le long terme de réduire la cinétose. Certains systèmes existants visent à réduire la cinétose, comme divulgués dans les documents US 2019/083739 A ou encore DE 10 2017 208 881 A.

### Résumé

La présente invention vient améliorer la situation.

A ce titre, la présente invention concerne un système d'assistance visuelle à un individu souffrant de cinétose. Le système comprend :
- un capteur configuré pour mesurer en temps réel des données de mouvement d'un véhicule dans un référentiel terrestre tridimensionnel,
- un dispositif d'horizon artificiel adapté pour générer en temps réel une image d'horizon artificiel sur un écran en fonction des données de mouvement du véhicule et de données mesurées de position de la tête de l'individu par rapport à l'écran, et
- un dispositif portable de réalité augmentée adapté pour afficher en temps réel l'image d'horizon artificiel à un individu, porteur du dispositif portable, occupant du véhicule.

Ainsi, même lorsque l'attention visuelle de l'individu, porteur du dispositif portable, se porte sur un élément ou un objet immobile dans le référentiel du véhicule, l'image d'horizon artificiel affichée par le dispositif portable de réalité augmentée permet d'informer visuellement l'individu des mouvements du véhicule. L'information visuelle de mouvement est alors cohérente avec l'information transmise par l'oreille interne au cerveau, de sorte que les effets de la cinétose sont réduits.

Le dispositif portable de réalité augmentée comprend par exemple des lunettes de réalité augmentée ou un masque de réalité augmentée.

Dans un ou plusieurs modes de réalisation, le dispositif d'horizon artificiel est adapté pour générer l'image d'horizon artificiel en fonction en outre d'une catégorie du véhicule. Le dispositif d'horizon artificiel peut ainsi être configuré pour une ou plusieurs des catégories de véhicules suivantes : automobile, train, aéronef et bateau.

En effet, selon la catégorie du véhicule, le dispositif d'horizon artificiel peut adopter une pondération adaptée des différents mouvements. Les mouvements sont de natures différentes d'un véhicule à l'autre. Typiquement, un aéronef et un bateau sont surtout confrontés à des rotations autour de l'axe latéral, c'est-à-dire le tangage, et autour de l'axe longitudinal, c'est à dire le roulis. En revanche, une automobile est plutôt amenée à effectuer des rotations autour de son axe vertical.

Dans un ou plusieurs modes de réalisation, le dispositif d'horizon artificiel est adapté pour générer l'image d'horizon artificiel en fonction en outre de données relatives à l'individu comprenant une ou plusieurs des informations suivantes : âge, morphologie, capacités visuelles et degré de sensibilité à la cinétose.

Dans un ou plusieurs modes de réalisation, le capteur est configuré en outre pour collecter des données de géolocalisation du véhicule et le dispositif d'horizon artificiel ou le capteur est adapté en outre pour prédire, sur la base des données de géolocalisation du véhicule, des données de mouvement du véhicule.

Dans un ou plusieurs modes de réalisation, le système comprend une base de données configurée pour stocker un ou plusieurs trajets du véhicule. Chaque trajet est associé, au sein de la base de données, à une ou plusieurs images d'horizon artificiel.

Avantageusement, le capteur est configuré en outre pour collecter des données de géolocalisation du véhicule et le dispositif d'horizon artificiel est adapté en outre pour déterminer, en fonction des données de mouvement et des données de géolocalisation du véhicule, un trajet courant du véhicule et comparer le trajet courant avec le ou les trajet(s) stocké(s) dans la base de données, le dispositif d'horizon artificiel étant adapté en outre pour:
- si le trajet courant est déjà stocké dans la base de données, générer l'image d'horizon artificiel en fonction de la ou les image(s) d'horizon artificiel associée(s) avec le trajet courant au sein de la base de données,
- sinon, stocker le trajet courant et la ou les image(s) d'horizon artificiel générée(s) sur le trajet courant dans la base de données.

De manière générale, l'utilisation de la géolocalisation pour anticiper le trajet suivi par le véhicule et donc les mouvements à venir permet une génération prédictive rapide de l'image d'horizon artificiel ce qui limite le décalage temporel entre l'horizon artificiel tel qu'il est affiché à l'individu via l'image d'horizon artificiel et la position réelle relative du véhicule, et donc de l'individu, par rapport à l'horizon réel.

Dans un ou plusieurs modes de réalisation, le capteur comprend :
- au moins un accéléromètre configuré pour mesurer des données relatives à une accélération du véhicule dans le référentiel terrestre tridimensionnel, et
- au moins un gyromètre configuré pour mesurer des données relatives à une vitesse angulaire du véhicule dans le référentiel terrestre tridimensionnel.
Les données de mouvement du véhicule comprennent alors les données relatives à l'accélération et à la vitesse angulaire du véhicule.

Dans un ou plusieurs modes de réalisation, le capteur ou le dispositif d'horizon artificiel est adapté en outre pour déterminer, en fonction des données de mouvement du véhicule, une rotation du véhicule, le dispositif d'horizon artificiel étant adapté en outre pour générer l'image d'horizon artificiel en fonction en outre de la rotation du véhicule.

Dans un ou plusieurs modes de réalisation, le capteur ou le dispositif d'horizon artificiel est adapté en outre pour déterminer, en fonction des données de mouvement du véhicule, une assiette du. véhicule, le dispositif d'horizon artificiel étant adapté en outre pour générer l'image d'horizon artificiel en fonction en outre de l'assiette du véhicule.

Dans un ou plusieurs modes de réalisation, l'image d'horizon artificiel comprend une ligne d'horizon artificiel.

Dans un ou plusieurs modes de réalisation, le dispositif portable de réalité augmentée est adapté en outre pour mesurer des données de mouvement de la tête de l'individu dans un référentiel tridimensionnel du véhicule, le dispositif d'horizon artificiel étant adapté pour générer l'image d'horizon artificiel en fonction en outre des données de mouvement de la tête de l'individu.

Dans un ou plusieurs modes de réalisation, le dispositif portable de réalité augmentée est adapté en outre pour mesurer des données de position de la tête de l'individu par rapport à un écran, le dispositif d'horizon artificiel étant adapté pour générer l'image d'horizon artificiel en fonction en outre des données de position de la tête de l'individu par rapport à l'écran et, éventuellement, de données relatives à l'écran.

Par exemple, les données relatives à l'écran comprennent des données relatives à des dimensions de l'écran et/ou des données relatives à un contenu multimédia affiché par l'écran.

Avantageusement, le dispositif portable de réalité augmentée est adapté en outre pour détecter une présence de l'écran dans le champ de vision de l'individu.

Comme expliqué précédemment, le système objet de la présente invention est particulièrement utile dans un contexte dans lequel l'individu, porteur du dispositif portable, ne dispose pas d'une information visuelle du mouvement du véhicule. Bien souvent, l'attention visuelle de l'individu se porte sur un écran, par exemple d'un téléphone ou d'une tablette numérique. Il peut donc être intéressant de tirer parti de la présence de l'écran dans le champ visuel de l'individu pour afficher l'image d'horizon artificiel.

Avantageusement, le dispositif d'horizon artificiel est adapté en outre pour, lorsque l'écran est détecté dans le champ de vision de l'individu, générer une image d'horizon artificiel comprenant un motif représentatif de l'horizon artificiel et superposable à une portion d'un contour de l'écran, le dispositif portable de réalité augmentée étant adapté pour superposer le motif à une image réelle de la portion du contour de l'écran.

Avantageusement, le dispositif d'horizon artificiel est adapté en outre pour, lorsque l'écran est détecté dans le champ de vision de l'individu, générer une image d'horizon artificiel comprenant un motif superposable à une portion de l'écran sous la forme d'un pavage déformé en fonction de l'horizon artificiel, le dispositif portable de réalité augmentée étant adapté pour superposer le motif à une image réelle de la portion de l'écran.

Par ailleurs, la présente invention concerne aussi un procédé, mis en oeuvre par des moyens informatiques, d'assistance visuelle à un individu souffrant de cinétose, comprenant :
- mesurer en temps réel, par un capteur, des données de mouvement d'un véhicule dans un référentiel terrestre tridimensionnel,
- générer sur un écran en temps réel une image d'horizon artificiel par un dispositif d'horizon artificiel en fonction des données de mouvement du véhicule et de données mesurées de position de la tête de l'individu par rapport à l'écran, et
- afficher en temps réel l'image d'horizon artificiel, via un dispositif portable de réalité augmentée, à un individu, porteur du dispositif portable, occupant du véhicule.

Enfin, la présente invention vise également un programme informatique comprenant des instructions pour la mise en oeuvre du procédé décrit précédemment lorsque les instructions sont exécutées par au moins un processeur.

### Brève description des dessins

D'autres caractéristiques, détails et avantages apparaîtront à la lecture de la description détaillée ci-après, et à l'analyse des dessins annexés, sur lesquels :
**[****Fig. 1****]** illustre schématiquement un système d'assistance visuelle à un individu souffrant de cinétose selon l'invention ;
**[****Fig. 2****]** illustre un individu portant, dans un véhicule, un dispositif portable de réalité augmentée du système d'assistance visuelle de la **[****Fig. 1****] ;**
**[****Fig. 3****]** illustre un procédé d'assistance visuelle à un individu souffrant de cinétose selon l'invention ;
**[****Fig. 4A****]** illustre une image d'horizon artificiel, affichée par le dispositif portable de réalité augmentée, dans un mode de réalisation dans lequel l'horizon artificiel est affiché sous la forme d'une ligne d'horizon artificiel ;
**[****Fig. 4B****]** illustre une image d'horizon artificiel dans un mode de réalisation dans lequel l'horizon artificiel est affiché sous la forme d'un motif superposé à une portion d'un contour d'un écran dans le champ de vision de l'individu ; et
**[****Fig. 4C****]** illustre une image d'horizon artificiel dans un mode de réalisation dans lequel l'horizon artificiel est affiché sous la forme d'un pavage déformé superposé à une portion de l'écran.

### Description des modes de réalisation

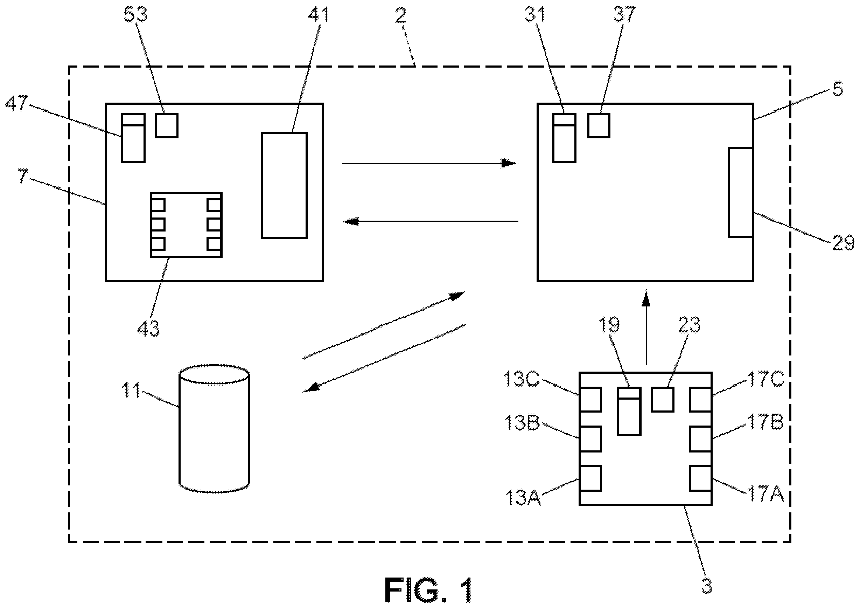

La **[****Fig. 1****]** illustre schématiquement un système d'assistance visuelle, ci-après système 2, à un individu souffrant de cinétose.

La cinétose, plus communément appelée « mal des transports », peut se manifester chez un individu, lors d'un trajet à bord d'un véhicule, sous la forme de différents symptômes comme une sensation d'inconfort, des nausées, des vertiges, de la fatigue ou encore des maux de tête.

La cinétose est causée par une contradiction entre les informations visuelles et les informations fournies par l'oreille interne au cours du trajet. En particulier, lorsque l'attention visuelle de l'individu est focalisée sur un élément immobile dans le référentiel du véhicule, et donc immobile pour l'individu, les yeux ne perçoivent pas le mouvement tandis que celui-ci est perçu par l'oreille interne, et plus exactement par le vestibule.

Le système 2 est adapté pour fournir à l'individu une information visuelle cohérente avec l'information de mouvement recueillie par l'oreille interne. Plus spécifiquement, le système 2 est adapté pour générer une image d'horizon artificiel en fonction de données de mouvement du véhicule dans lequel se trouve l'individu, puis afficher à l'individu en question l'image d'horizon artificiel en réalité augmentée. Ainsi, même lorsque l'attention visuelle de l'individu est focalisée sur un élément immobile dans le référentiel du véhicule, l'image d'horizon artificiel affichée en temps réel donne une information visuelle du mouvement cohérente avec ce que l'oreille interne perçoit.

Le système 2 comprend un capteur 3, un dispositif d'horizon artificiel 5 et un dispositif portable de réalité augmentée 7. Avantageusement, le système 2 comprend aussi une base de données 11.

Sur la **[****Fig. 1****],** le dispositif d'horizon artificiel 5 et le dispositif portable de réalité augmentée 7 sont deux entités distinctes. Il doit toutefois être compris ici que le dispositif d'horizon artificiel 5 et le dispositif portable de réalité augmentée 7 peuvent être un seul et même dispositif.

Le capteur 3 est configuré pour mesurer en temps réel des données de mouvement d'un véhicule dans un référentiel terrestre tridimensionnel.

Par exemple, les données de mouvement mesurées par le capteur 3 sont relatives à une accélération du véhicule selon une ou plusieurs directions, ou axes, du référentiel terrestre tridimensionnel. Les données de mouvement peuvent également être relatives à une vitesse angulaire du véhicule selon une ou plusieurs directions, ou axes, du référentiel terrestre tridimensionnel.

Le capteur 3 peut également être configuré pour recueillir d'autres données, comme par exemple une géolocalisation du véhicule correspondant à une position courante du véhicule. Cette position peut être déterminée automatiquement par un serveur connecté à un réseau auquel le capteur 3 est connecté.

Bien entendu, le capteur 3 peut aussi comprendre un module de géolocalisation, non illustré ici, pour calculer des données de géolocalisation du véhicule.

Comme illustré en **[****Fig. 1****]**, Le capteur 3 comprend au moins un accéléromètre, ici trois accéléromètres 13A, 13B et 13C, au moins un gyromètre, ici trois gyromètres 17A, 17B et 17C, une mémoire 19 et un processeur 23.

L'accéléromètre est configuré pour mesurer des données relatives à une accélération du véhicule dans le référentiel terrestre tridimensionnel.

Le véhicule pouvant se déplacer dans un espace tridimensionnel, il est avantageux de mesurer l'accélération du véhicule dans chacune des trois directions du référentiel terrestre tridimensionnel. Ainsi, l'accéléromètre 13A mesure des données relatives à l'accélération du véhicule dans une première direction, ou selon un premier axe, l'accéléromètre 13B mesure des données relatives à l'accélération du véhicule dans une deuxième direction, ou selon un deuxième axe et l'accéléromètre 13C mesure des données relatives à l'accélération du véhicule dans une troisième direction, ou selon un troisième axe.

Ici, trois accéléromètres 13A, 13B et 13C ont été illustrés. Toutefois, on comprend qu'un seul et même accéléromètre peut mesurer l'accélération du véhicule dans chacune des trois directions.

Le gyromètre est configuré pour mesurer des données relatives à une vitesse angulaire du véhicule dans le référentiel terrestre tridimensionnel.

De même que pour l'accélération, il est avantageux de mesurer la vitesse angulaire du véhicule dans chacune des trois directions du référentiel terrestre tridimensionnel. Ainsi, le gyromètre 17A mesure des données relatives à la vitesse angulaire du véhicule dans la première direction, ou selon le premier axe, le gyromètre 17B mesure des données relatives à la vitesse angulaire du véhicule dans la deuxième direction, ou selon le deuxième axe et le gyromètre 17C mesure des données relatives à la vitesse angulaire du véhicule dans la troisième direction, ou selon le troisième axe.

Ici, trois gyromètres 17A, 17B et 17C ont été illustrés. Toutefois, on comprend qu'un seul et même gyromètre peut mesurer la vitesse angulaire du véhicule dans chacune des trois directions.

La mémoire 19 est configurée pour stocker des instructions d'un programme informatique dont l'exécution par le processeur 23 se traduit par le fonctionnement du capteur 3.

La mémoire 19 peut également stocker les mesures réalisées en temps réel par le capteur 3.

Le processeur 23 peut être configuré pour déterminer, en fonction des données de mouvement du véhicule, une rotation du véhicule.

Plus exactement, le processeur 23 peut déterminer une assiette du véhicule. Pour un aéronef, on détermine notamment l'assiette longitudinale qui désigne la position de l'axe longitudinal de l'aéronef par rapport au plan horizontal. Pour un bateau, on détermine plutôt l'assiette latérale, aussi appelée gîte, pour désigner la position de l'axe latéral du bateau par rapport au plan horizontal.

Le dispositif d'horizon artificiel 5 est adapté pour générer en temps réel une image d'horizon artificiel en fonction des données de mouvement du véhicule.

On comprend que le dispositif d'horizon artificiel 5 est adapté pour recevoir les données de mouvement mesurées en temps réel par le capteur 3 et pour générer, en fonction de ces données de mouvement, une image d'horizon artificiel.

L'image d'horizon artificiel est destinée à être affichée à un individu afin de lui donner en temps réel une information visuelle du mouvement du véhicule via le mouvement de l'horizon artificiel affiché. Les images d'horizon artificiel sont générées en temps réel pour informer visuellement l'individu des mouvements du véhicule par rapport à l'horizon réel.

Comme expliqué précédemment, des données de géolocalisation du véhicule peuvent être déterminées par le capteur 3. Dans un tel mode de réalisation, le dispositif d'horizon artificiel 5 peut être configuré en outre pour déterminer, lui-même, des données de mouvement du véhicule en fonction de la géolocalisation de celui-ci. En effet, les données de géolocalisation peuvent être utilisées pour déterminer un trajet suivi par le véhicule et auquel cas anticiper le mouvement du véhicule, notamment les virages.

Bien entendu, le capteur 3 peut lui aussi déterminer les données de mouvement du véhicule en fonction des données de géolocalisation selon le même principe de déterminer le trajet suivi par le véhicule et anticiper les mouvements à venir.

Un tel mode de réalisation est applicable notamment au cas dans lequel le véhicule considéré est une automobile dont les mouvements sont *a priori* contraints par les courbes de la route suivi par l'automobile.

Comme illustré sur la **[****Fig. 1****]**, le dispositif d'horizon artificiel 5 comprend une interface de configuration 29, une mémoire 31 et un processeur 37.

L'interface de configuration 29 est adaptée pour configurer le dispositif d'horizon artificiel 5.

En effet, outre les données de mouvement du véhicule, d'autres informations et données peuvent être utilisées pour générer l'image d'horizon artificiel.

Par exemple, le dispositif d'horizon artificiel 5 est adapté pour générer l'image d'horizon artificiel en fonction en outre d'une catégorie du véhicule. Le dispositif d'horizon artificiel 5 peut ainsi être configuré pour une ou plusieurs des catégories de véhicules suivantes : automobile, train, aéronef et bateau. En effet, la nature des mouvements peut être très différente d'une catégorie de véhicule à une autre.

Ainsi, alors qu'un aéronef et un bateau peuvent être confrontés à des rotations de grande amplitude autour de l'axe latéral (on parle alors de tangage) et autour de l'axe longitudinal (on parle alors de roulis), l'automobile et le train seront confronté à des rotations de plus faible amplitude autour de ces axes. A l'inverse, une automobile est en général confrontée à des mouvements de grande amplitude autour de l'axe vertical, on parle alors de lacet, ce qui est moins le cas pour un aéronef.

L'interface de configuration 29 permet ainsi de spécifier la catégorie du véhicule de sorte que le dispositif d'horizon artificiel 5 peut ainsi pondérer en conséquence les données de mouvement mesurées.

Avantageusement, le dispositif d'horizon artificiel 5 est adapté pour générer l'image d'horizon artificiel en fonction en outre de données relatives à l'individu. Ces données comprennent par exemple une ou plusieurs des informations suivantes : âge, morphologie, capacités visuelles et degré de sensibilité à la cinétose.

L'effet de la cinétose est en effet variable d'un individu à l'autre du fait de caractéristiques physiques propres à chacun. Ainsi, pour un individu dont le degré de sensibilité est élevé, il est nécessaire que l'image d'horizon artificiel représente l'horizon artificiel de manière plus prononcée et occupe une plus grande zone du champ visuel de l'individu que pour un individu dont le degré de sensibilité à la cinétose est faible.

Bien entendu, l'interface de configuration 29 peut comporter d'autres fonctionnalités et permettre d'allumer ou éteindre le dispositif d'horizon artificiel 5.

La mémoire 31 est configurée pour stocker des instructions d'un programme informatique dont l'exécution par le processeur 37 se traduit par le fonctionnement du dispositif d'horizon artificiel 5.

En particulier, le processeur 37 peut être configuré, de même que le processeur 23 du capteur 3, pour détecter ou déterminer une rotation du véhicule en fonction des données de mouvement du véhicule.

Le dispositif portable de réalité augmentée, ci-après dispositif portable 7, est adapté pour afficher en temps réel l'image d'horizon artificiel à un individu, porteur du dispositif portable, occupant du véhicule. Le dispositif portable 7 fonctionne sur le principe de la technologie de réalité augmentée, à savoir l'intégration ou la superposition d'éléments virtuels au sein d'un environnement réel. L'image d'horizon artificiel est ainsi combinée au réel dans le champ de vision de l'individu porteur du dispositif portable 7.

En d'autres termes, le dispositif portable 7 est adapté pour incruster une information visuelle du mouvement se manifestant sous la forme d'un horizon artificiel dans l'image réelle visualisée par l'individu. Ainsi, même lorsque tous les éléments présents dans le champ visuel de l'individu sont immobiles dans le référentiel du véhicule et donc immobiles par rapport à l'individu, l'image d'horizon artificiel informe les yeux de l'individu du mouvement du véhicule. Le résultat obtenu est une meilleure corrélation entre les informations transmises au cerveau par l'oreille interne et les informations visuelles recueillies par les yeux de l'individu.

Le dispositif de réalité augmentée 7 comprend des lunettes de réalité augmentée ou un masque de réalité augmentée 41, éventuellement un capteur de mouvement 43, une mémoire 47 et un processeur 53.

Les lunettes de réalité et le masque de réalité augmentée sont configurés pour afficher l'image d'horizon artificiel générée par le dispositif d'horizon artificiel 5 à l'individu porteur des lunettes ou du casque en question. Ce type de dispositif est largement connu de l'homme du métier et permet de superposer, dans le champ de vision du porteur, une image virtuelle et une image réelle.

Le capteur de mouvement 43 est configuré pour mesurer des données de mouvement relatives à la tête de l'individu porteur du dispositif portable 7.

Par exemple, le capteur de mouvement 43 est adapté pour mesurer des données de mouvement de la tête de l'individu dans un référentiel tridimensionnel du véhicule. En effet, une partie de la cinétose dont souffre l'individu peut également être due aux mouvements de sa tête. Ainsi, en plus des données de mouvement du véhicule, le système 2 peut prévoir, dans un ou plusieurs modes de réalisation, de mesurer également le mouvement de la tête de l'individu porteur du dispositif portable 7.

Globalement, le fonctionnement du capteur de mouvement 43 est le même que celui du capteur 3. Ainsi, le capteur de mouvement 43 est configuré pour mesurer une accélération et une vitesse angulaire de la tête de l'individu dans le référentiel tridimensionnel du véhicule. Pour réaliser de telles mesures, le capteur de mouvement 43 peut intégrer un ou plusieurs accéléromètres et un ou plusieurs gyromètres pour mesurer respectivement l'accélération et la vitesse dans une ou plusieurs directions du référentiel tridimensionnel du véhicule.

Comme expliqué précédemment, le système 2 décrit ici est particulièrement adapté pour un individu, occupant d'un véhicule, dont l'attention visuelle est focalisée sur des éléments ou objets immobiles dans le référentiel du véhicule. En effet, dans un tel cas, l'information visuelle transmise par les yeux de l'individu n'est pas une information de mouvement et est donc en contradiction avec l'information transmise au cerveau par l'oreille interne.

Typiquement, l'attention de l'individu se porte sur l'écran d'un terminal utilisateur, tel qu'un téléphone intelligent (plus connu sous le terme anglophone « smartphone ») ou une tablette numérique. Ainsi, dans un ou plusieurs modes de réalisation, le système 2 prend en compte la présence d'un écran dans le champ visuel de l'individu pour générer l'image d'horizon artificiel.

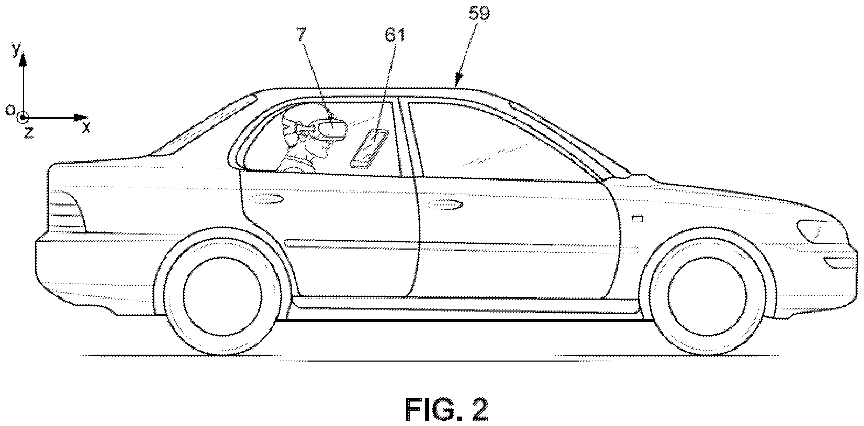

Ce cas particulier est illustré en **[****Fig. 2****].** Le véhicule 59 considéré est ici une automobile. L'individu effectue un trajet à bord de l'automobile 59 et peut souffrir de cinétose au cours du trajet. Cette cinétose est d'autant plus probable que, comme illustré sur la **[****Fig. 2****]**, l'attention visuelle de l'individu peut se focaliser sur un écran 61. L'individu illustré sur cette figure porte le dispositif portable de réalité augmentée 7.

Aussi, dans un tel cas, le dispositif portable 7 peut être adapté en outre pour mesurer des données de positions de la tête de l'individu par rapport à l'écran 61. Le dispositif portable 7 est alors également adapté pour transmettre ces données de position de la tête de l'individu au dispositif d'horizon artificiel 5 pour que ce dernier génère l'image d'horizon artificiel en fonction en outre de ces données de position de la tête de l'individu par rapport à l'écran 61 et, éventuellement, aussi de données relatives à l'écran 61.

Les données relatives à l'écran 61 comprennent par exemple des données relatives à des dimensions de l'écran 61. Ces données relatives à l'écran 61 peuvent aussi comprendre des données relatives à un contenu multimédia affiché par l'écran 61. Ces données peuvent par exemple être fournies au dispositif d'horizon artificiel 5 via l'interface de configuration 29.

Avantageusement, le dispositif portable 7 est adapté en outre pour détecter une présence de l'écran 61 dans le champ de vision de l'individu. Le dispositif portable 7 comprend un module de capture et de traitement d'image permettant de capturer une image puis de détecter la présence d'un écran sur cette image. Ainsi, lorsque l'écran 61 est détecté dans le champ visuel de l'individu, une information de présence de l'écran 61 est acquise par le dispositif portable 7 puis transmise au dispositif d'horizon artificiel 5. Celui-ci est alors configuré pour prendre en compte la présence de l'écran dans le champ visuel de l'individu pour générer l'image d'horizon artificiel. Des détails concernant l'utilisation de l'écran 61, ou plus exactement de l'image de l'écran 61, seront donnés dans la suite de la description.

La mémoire 47 est configurée pour stocker des instructions d'un programme informatique dont l'exécution par le processeur 53 se traduit par le fonctionnement du dispositif portable 7.

Enfin, la base de données 11 est configurée pour stocker un ou plusieurs trajets du véhicule. Au sein de la base de données 11, chaque trajet est associé à une ou plusieurs images d'horizon artificiel.

Ce mode de réalisation tire parti du fait qu'un véhicule peut être amené à répéter les mêmes trajets, de sorte qu'il est avantageux de conserver dans la base de données 11 des trajets effectués et des images d'horizon artificiel générées par le dispositif d'horizon artificiel 5 au cours de ces trajets.

Ainsi, au cours d'un trajet effectué par le véhicule, le trajet effectué est enregistré et stocké dans la base de données 11. Ce trajet peut notamment être caractérisé par les données de mouvement mesurées au cours du trajet ainsi que par les données de géolocalisation mesurées par le capteur 3.

Parallèlement, les images d'horizon artificiel générées en temps réel au cours du trajet par le dispositif d'horizon artificiel 5 peuvent être stockées dans la base de données 11. Les images d'horizon artificiel peuvent aussi être stockées dans la mémoire 31 puis être stockées seulement à la fin du trajet dans la base de données 11.

Dans le mode de réalisation dans lequel le système 2 comprend la base de données 11 décrite précédemment, il est particulièrement avantageux pour le dispositif d'horizon artificiel 5 d'être adapté pour détecter, au cours d'un trajet courant, si ce trajet a déjà été effectué et répertorié dans la base de données 11.

Le dispositif d'horizon artificiel 5 est alors adapté en outre pour déterminer, en fonction des données de mouvement et des données de géolocalisation du véhicule, un trajet courant du véhicule et comparer ce trajet courant avec le ou les trajet(s) stocké(s) dans la base de données 11. Le dispositif d'horizon artificiel 5 est adapté en outre pour:
- si le trajet courant est déjà stocké dans la base de données 11, générer l'image d'horizon artificiel en fonction de la ou des image(s) d'horizon artificiel associée(s) avec le trajet courant au sein de la base de données 11,
- sinon, stocker le trajet courant et la ou des image(s) d'horizon artificiel générée(s) sur le trajet courant dans la base de données 11.

L'avantage d'un tel mode de réalisation est de pouvoir anticiper les mouvements du véhicule et de pouvoir afficher l'image d'horizon artificiel à l'individu plus tôt, ce qui limite encore davantage les effets du mal des transports.

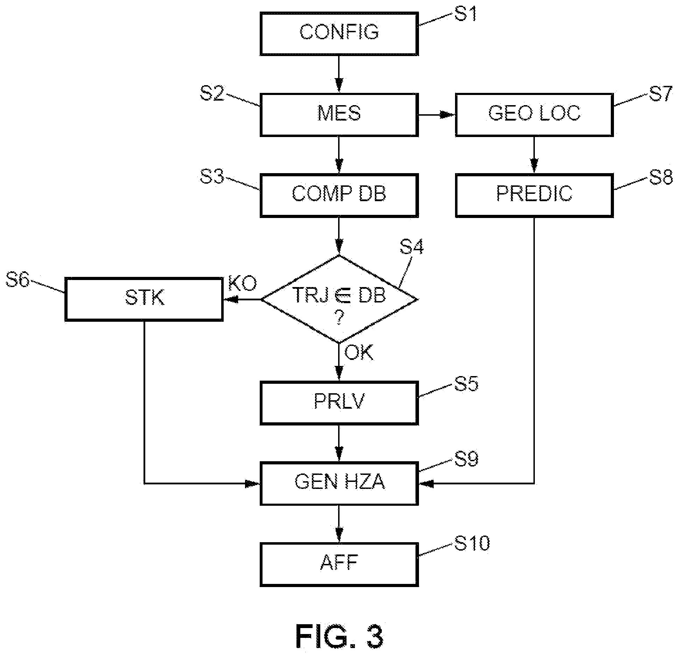

Un procédé d'assistance visuelle à un individu souffrant de cinétose va maintenant être décrit en référence à la **[****Fig. 3****].**

Dans le contexte de la mise en oeuvre du procédé, un individu, pouvant être sujet au mal des transports, effectue un trajet à bord d'un véhicule. Au cours du trajet, le véhicule est en mouvement par rapport à l'horizon réel et cette information de mouvement, bien que recueillie par l'oreille interne puis transmise au cerveau, peut ne pas être détectée par les yeux de l'individu, lesquels envoient alors une information erronée au cerveau. La contradiction entre l'information visuelle et l'information fournie par l'oreille interne est alors la cause des maux décrits précédemment et qui constituent la cinétose.

En particulier, cette absence d'information visuelle est souvent liée au fait que rien dans le champ visuel de l'individu n'indique le mouvement, ce qui peut notamment arriver lorsque l'attention visuelle de l'individu est focalisée sur des éléments ou des objets immobiles dans le référentiel du véhicule. Par exemple, dans le cas illustré en **[****Fig. 2****]**, l'individu voyageant à bord de l'automobile 59 peut être focalisé sur l'écran 61 parce qu'il visionne un contenu multimédia tel qu'une vidéo. Le système 2 décrit précédemment permet alors de réduire les risques de cinétose.

Dans une étape S1, le dispositif d'horizon artificiel 5 du système 2 est configuré. Cette configuration est par exemple réalisée via l'interface de configuration 29. Cette étape de configuration permet, par exemple, d'indiquer au dispositif d'horizon artificiel 5 la catégorie du véhicule. Ainsi le véhicule peut être, de manière non-limitative, une automobile, un train, un aéronef ou un bateau. Le véhicule peut également être un sous-marin.

Dans l'exemple illustré en **[****Fig. 2****],** le véhicule 59 au sein duquel se trouve l'individu est une automobile.

L'information portant sur la catégorie du véhicule est particulièrement utile puisque, d'un véhicule à l'autre, les mouvements sont de natures différentes. Comme expliqué précédemment, un aéronef et un bateau sont surtout confrontés à des rotations autour de l'axe latéral, c'est-à-dire le tangage, et autour de l'axe longitudinal, c'est à dire le roulis. En revanche, une automobile est plutôt amenée à effectuer des rotations autour de son axe vertical.

La spécification de la catégorie du véhicule lors de l'étape de configuration permet ainsi, par exemple, une pondération adaptée des différents mouvements du véhicule de sorte que le dispositif d'horizon artificiel 5 donne, à chaque mouvement du véhicule dans une direction donnée, une importance adaptée et pondérée.

La configuration du dispositif d'horizon artificiel 5 peut en outre permettre de fournir des données relatives à l'individu comprenant une ou plusieurs des informations suivantes : âge, morphologie, capacités visuelles et degré de sensibilité à la cinétose.

Lors d'une étape S2, le capteur 3 mesure les données de mouvement du véhicule. Comme expliqué précédemment, les données de mouvement du véhicule comprennent par exemple une accélération du véhicule dans le référentiel terrestre tridimensionnel et une vitesse angulaire du véhicule dans le référentiel terrestre tridimensionnel.

Dans l'exemple illustré en **[****Fig. 2****]**, un référentiel terrestre tridimensionnel est représenté. Ce référentiel a pour origine un point O et comprend trois axes orthogonaux x, y et z. Typiquement, si le capteur 3 est celui illustré schématiquement en **[****Fig. 1****]** et comprenant trois accéléromètres 13A, 13B, 13C et trois gyromètres 17A, 17B, 17C, alors :
- l'accéléromètre 13A et le gyromètre 17A mesurent respectivement l'accélération et la vitesse angulaire dans la direction x ;
- l'accéléromètre 13B et le gyromètre 17B mesurent respectivement l'accélération et la vitesse angulaire dans la direction y ; et
- l'accéléromètre 13C et le gyromètre 17C mesurent respectivement l'accélération et la vitesse angulaire dans la direction z.

Par ailleurs, d'autres mesures peuvent être réalisées au cours de cette étape S2. Par exemple, le capteur 3 peut mesurer des données de géolocalisation du véhicule. Ces données peuvent être collectées en temps réel. Comme expliqué précédemment, les données de géolocalisation peuvent être déterminées par le capteur 3 via un serveur relié à un réseau ou via un module de géolocalisation intégré au capteur 3.

Toujours lors de cette étape S2 dispositif portable 7 peut mesurer des données de mouvement de la tête de l'individu dans un référentiel tridimensionnel du véhicule. Un tel référentiel n'est pas illustré en **[****Fig. 2****].** mais permet, traditionnellement, de définir un axe vertical, un axe longitudinal et un axe latéral. Ces axes sont propres à la géométrie du véhicule et permettent de caractériser notamment les mouvements de rotation du véhicule, notamment le lacet qui correspond à une rotation autour de l'axe vertical, le roulis qui correspond à une rotation autour de l'axe longitudinal et le tangage qui correspond à une rotation autour de l'axe latéral. Ces mêmes concepts peuvent aussi s'appliquer aux mouvements de la tête de l'individu au sein du véhicule.

Parmi les autres mesures réalisées, le dispositif portable 7 peut aussi mesurer la position de la tête de l'individu par rapport à un écran. De telles mesures peuvent être réalisées en particulier dans le contexte de la **[****Fig. 2****]** dans lequel l'individu, occupant du véhicule 59, est susceptible au cours du trajet de regarder l'écran 61 pour, par exemple, visionner un contenu multimédia.

Comme expliqué précédemment, certains modes de réalisation de l'invention permettent aussi une génération prédictive de l'image d'horizon artificiel. Un premier mode de réalisation est décrit ci-après et correspond aux étapes S3, S4, S5 et S6 du procédé illustré en **[****Fig. 3****].** Un deuxième mode de réalisation est également décrit ci-après et correspond aux étapes S7 et S8 du procédé illustré en **[****Fig. 3****].** Ces modes de réalisations peuvent bien sûr être mis en oeuvre en combinaison.

Concernant le premier mode de réalisation : lors d'une étape S3, les données de mouvement et de géolocalisation du véhicule sont mises en corrélation avec le ou les trajet(s) stocké(s) dans la base de données 11. Cette corrélation vise à déterminer si le trajet courant suivi par le véhicule a déjà été répertorié dans la base de données 11. Chaque trajet stocké dans la base de données 11 est référencé par un ensemble de données de mouvement et de données de géolocalisation du véhicule ce qui permet au système 2 de comparer, au cours de l'étape S3, le trajet courant avec des trajets stockés.

Ainsi, lors d'une étape S4, le système 2 détermine, sur la base de la comparaison effectuée entre le trajet courant, caractérisé par les données de mouvement et de géolocalisation du véhicule, et le ou les trajet(s) stocké(s) dans la base de données 11, si le trajet courant est stocké ou non dans la base de données 11.

Lors d'une étape S5 mise en oeuvre si le trajet courant du véhicule est déjà stocké dans la base de données 11, la ou les image(s) d'horizon artificiel associée(s) au sein de la base de données 11 au trajet correspondant sont prélevées et transmises au dispositif d'horizon artificiel 5.

Sinon, lors d'une étape S6 mise en oeuvre si aucun trajet stocké dans la base de données 11 ne correspond au trajet courant du véhicule, le dispositif d'horizon artificiel 5 stocke le trajet courant dans la base de données 11. Le trajet courant est stocké dans la base de données 11 avec les données de mouvement et de géolocalisation du véhicule obtenues lors de l'étape S2. Par ailleurs, les images d'horizon artificiel générées par le dispositif d'horizon artificiel 5 lors de ce trajet courant seront également stockées dans la base de données 11 pour être associées avec le trajet courant.

Concernant le deuxième mode de réalisation : lors d'une étape S7, les données de géolocalisation du véhicule sont utilisées pour anticiper, par exemple à l'aide d'une carte accessible au système 2 via un réseau, le trajet suivi par le véhicule.

Lors d'une étape S8, le dispositif d'horizon artificiel 5 utilise le trajet à venir déterminé à l'étape précédent pour prévoir les mouvements futurs du véhicule.

Dans l'exemple illustré en **[****Fig. 2****]**, le véhicule considéré est l'automobile 59. Typiquement, le déplacement de l'automobile 59 est contraint par le tracé des routes de sorte que le mouvement de l'automobile 59 suit le tracé de la route sur laquelle elle se trouve. Ainsi, les données de géolocalisation de l'automobile 59 permettent de déterminer, via une carte, la position de l'automobile 59 et donc la route suivie par l'automobile 59. Il est ainsi possible, en utilisant le tracé de la route suivi par l'automobile 59, de prévoir les mouvements du véhicule, notamment les virages.

Lors d'une étape S9, le dispositif d'horizon artificiel 5 génère en temps réel une image d'horizon artificiel en fonction des données de mouvement du véhicule. L'image d'horizon artificiel permet d'informer visuellement l'individu des mouvements du véhicule par rapport à l'horizon réel.

Par exemple, l'image d'horizon artificiel comprend une ligne d'horizon artificiel.

Par ailleurs, d'autres données peuvent être prises en compte pour générer l'image d'horizon artificiel. Comme expliqué précédemment, le dispositif d'horizon artificiel 5 peut utiliser les informations renseignées via l'interface de configuration 29, comme la catégorie du véhicule ou les données relatives à l'individu.

En référence aux deux modes de réalisations décrits plus haut, la génération de l'image d'horizon artificiel peut également être prédictive en se basant sur les images d'horizon artificiel déjà générées pour le même trajet et conservées dans la base de données 11 (premier mode de réalisation) ou en utilisant le tracé à venir du trajet suivi pour anticiper les mouvements du véhicule par rapport à l'horizon réel et générer l'image d'horizon artificiel en conséquence (deuxième mode de réalisation).

Par ailleurs, dans le cas où l'attention visuelle de l'individu se focalise sur un écran, comme dans l'exemple illustré en **[****Fig. 2****]**, l'image réelle de l'écran peut également être utilisée pour générer une image d'horizon artificiel adaptée.

A ce titre, comme expliqué précédemment, le dispositif portable 7 peut comprendre un module de capture et traitement d'image de sorte que, au cours de la mise en oeuvre du procédé, le dispositif portable 7 capture une image réelle pour détecter la présence ou non d'un écran dans cette image réelle correspondant au champ de vision de l'individu porteur du dispositif portable 7.

D'autre part, le dispositif portable 7 peut, au cours du procédé, déterminer des données relatives à l'écran, à savoir les dimensions de celui-ci ou le contenu multimédia affiché. Ces données relatives à l'écran sont transmises au dispositif d'horizon artificiel 5 et sont utilisées, lors de l'étape S9, pour générer l'image d'horizon artificiel.

Ainsi, lorsque l'écran est détecté dans le champ de vision de l'individu, le dispositif d'horizon artificiel 5 génère une image d'horizon artificiel comprenant un motif représentatif de l'horizon artificiel et superposable à une portion d'un contour de l'écran.

Alternativement ou parallèlement, lorsque l'écran est détecté dans le champ de vision de l'individu, le dispositif d'horizon artificiel génère une image d'horizon artificiel comprenant un motif superposable à une portion de l'écran sous la forme d'un pavage déformé en fonction de l'horizon artificiel.

Enfin, lors d'une étape S10, le dispositif de réalité augmentée 7 affiche en temps réel l'image d'horizon artificiel à l'individu, porteur du dispositif portable 7, occupant du véhicule.

Plus exactement, les lunettes de réalité augmentée ou le casque de réalité augmenté intégré(es) au dispositif portable 7 affiche(nt) l'image d'horizon artificiel à l'individu de manière à superposer l'image d'horizon artificiel à l'image réelle, intégrant ainsi l'horizon artificiel en temps réel dans le champ de vision de l'individu qui, ainsi, peut percevoir visuellement les mouvements par rapport à l'horizon réel.

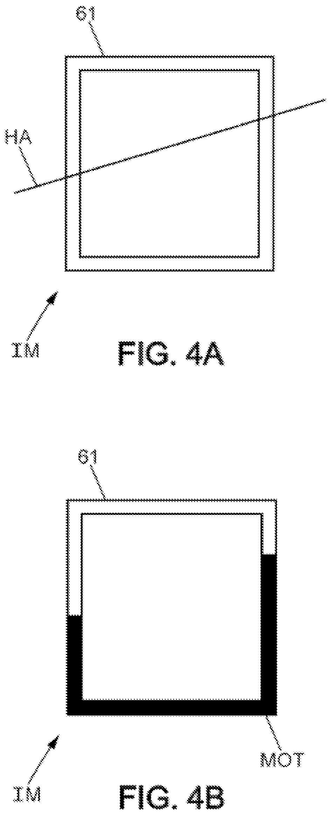

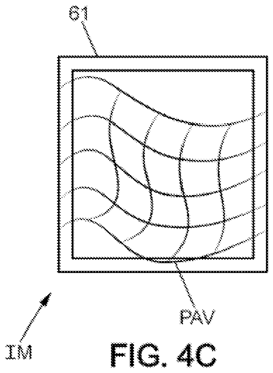

Des combinaisons d'images d'horizon artificiel et d'images réelles, formant ainsi chacune une image IM visualisée par l'individu, sont illustrées selon différents modes de réalisation en **[****Fig. 4A]**, [**Fig. 4B**] et **[****Fig. 4C****].**

Sur chacune de ces images apparait l'écran 61 puisqu'on se place à chaque fois dans le cas où l'écran 61 est dans le champ de vision de l'individu, sa présence étant détectée par le module de capture et traitement d'image du dispositif portable 7.

Dans l'exemple illustré en **[****Fig. 4A****]**, l'image d'horizon artificiel prend la forme d'une ligne d'horizon artificiel HA. Cette ligne matérialise la position de l'horizon réel et sa position sur l'image d'horizon artificiel suit donc les mouvements du véhicule. Il est à noter que, dans cet exemple, le dispositif d'horizon artificiel 5 n'exploite pas la présence de l'écran dans le champ de vision de l'individu pour générer l'image d'horizon artificiel.

Dans l'exemple de la **[****Fig. 4B****]**, l'image d'horizon artificiel utilise cette fois-ci la présence de l'écran 61 dans le champ de vision de l'individu. Ainsi, l'image d'horizon artificiel comprend un motif MOT superposable à une portion d'un contour de l'écran 61. Le dispositif portable 7 superpose, lors de l'étape S10, ce motif à la portion correspondante du contour de l'écran 61. L'avantage d'un tel motif MOT est de ne pas gêner la visualisation, par l'individu, du contenu affiché par l'écran 61. Dans cet exemple, le motif MOT permet de visualiser une ligne d'horizon artificiel qui joindrait les extrémités du motif MOT, situées respectivement sur les bords latéraux de l'écran 61.

Enfin, dans l'exemple de la **[****Fig. 4C****]**, l'image d'horizon artificiel utilise également la présence de l'écran 61 dans le champ de vision de l'individu. L'image d'horizon artificiel comprend un motif superposable à une portion de l'écran 61 sous la forme d'un pavage déformé PAV. La déformation varie en temps réel pour caractériser les mouvements du véhicule par rapport à l'horizon réel. Le pavage PAV illustré sur cette figure correspond à un quadrillage et est superposé à l'écran 61.

La présente invention présente plusieurs avantages.

Tout d'abord, l'utilisation de la réalité augmentée permet d'informer visuellement un individu, occupant d'un véhicule, des mouvements du véhicule en question par rapport à l'horizon réel quand bien même l'attention visuelle de l'individu serait portée sur des éléments ou des objets immobiles dans le référentiel du véhicule.

Ensuite, l'utilisation de la géolocalisation pour anticiper le trajet suivi par le véhicule et donc les mouvements à venir permet une génération prédictive rapide de l'image d'horizon artificiel ce qui limite le décalage temporel entre l'horizon artificiel tel qu'il est affiché à l'individu via l'image d'horizon artificiel et la position réelle relative du véhicule, et donc de l'individu, par rapport à l'horizon réel.

Enfin, l'utilisation de la présence de l'écran dans le champ de vision de l'individu pour superposer l'image d'horizon artificiel à l'image réelle permet d'apporter l'information de mouvement au plus près de l'attention visuelle de l'individu, focalisée sur le contenu affiché à l'écran.

## Revendications

1. Système (2) d'assistance visuelle à un individu souffrant de cinétose, comprenant :
- un capteur (3) configuré pour mesurer en temps réel des données de mouvement d'un véhicule (59) dans un référentiel terrestre tridimensionnel,
- un dispositif d'horizon artificiel (5) adapté pour générer en temps réel une image d'horizon artificiel sur un écran en fonction desdites données de mouvement du véhicule et de données mesurées de position de la tête de l'individu par rapport à l'écran, et
- un dispositif portable (7) de réalité augmentée adapté pour afficher en temps réel l'image d'horizon artificiel à un individu, porteur dudit dispositif portable, occupant dudit véhicule.

2. Système selon la revendication 1, dans lequel le dispositif portable de réalité augmentée comprend des lunettes de réalité augmentée (41) ou un masque de réalité augmentée (41).

3. Système selon la revendication 1 ou 2, dans lequel le dispositif d'horizon artificiel est adapté pour générer l'image d'horizon artificiel en fonction en outre d'une catégorie du véhicule, le dispositif d'horizon artificiel pouvant ainsi être configuré pour une ou plusieurs des catégories de véhicules suivantes : automobile, train, aéronef et bateau.

4. Système selon l'une des revendications précédentes, dans lequel le dispositif d'horizon artificiel est adapté pour générer l'image d'horizon artificiel en fonction en outre de données relatives à l'individu comprenant une ou plusieurs des informations suivantes : âge, morphologie, capacités visuelles et degré de sensibilité à la cinétose.

5. Système selon l'une des revendications précédentes, dans lequel le capteur est configuré en outre pour collecter des données de géolocalisation du véhicule, le dispositif d'horizon artificiel ou le capteur étant adapté en outre pour prédire, sur la base desdites données de géolocalisation du véhicule, des données de mouvement du véhicule.

6. Système selon l'une des revendications précédentes, comprenant une base de données (11) configurée pour stocker un ou plusieurs trajets du véhicule, chaque trajet étant associé, au sein de la base de données, à une ou plusieurs images d'horizon artificiel.

7. Système selon la revendication 6, dans lequel le capteur est configuré en outre pour collecter des données de géolocalisation du véhicule et dans lequel le dispositif d'horizon artificiel est adapté en outre pour déterminer, en fonction des données de mouvement et des données de géolocalisation du véhicule, un trajet courant du véhicule et comparer ledit trajet courant avec le ou les trajet(s) stocké(s) dans la base de données, le dispositif d'horizon artificiel étant adapté en outre pour:
- si le trajet courant est déjà stocké dans la base de données, générer l'image d'horizon artificiel en fonction de la ou les image(s) d'horizon artificiel associée(s) avec ledit trajet courant au sein de la base de données,
- sinon, stocker le trajet courant et la ou les image(s) d'horizon artificiel générée(s) sur ledit trajet courant dans la base de données.

8. Système selon l'une des revendications précédentes, dans lequel le capteur comprend :
- au moins un accéléromètre (13A, 13B, 13C) configuré pour mesurer des données relatives à une accélération du véhicule dans le référentiel terrestre tridimensionnel, et
- au moins un gyromètre (17A, 17B, 17C) configuré pour mesurer des données relatives à une vitesse angulaire du véhicule dans le référentiel terrestre tridimensionnel,
les données de mouvement du véhicule comprenant lesdites données relatives à l'accélération et à la vitesse angulaire du véhicule.

9. Système selon l'une des revendications précédentes, dans lequel le capteur ou le dispositif d'horizon artificiel est adapté en outre pour déterminer, en fonction des données de mouvement du véhicule, une rotation dudit véhicule, le dispositif d'horizon artificiel étant adapté en outre pour générer l'image d'horizon artificiel en fonction en outre de ladite rotation du véhicule.

10. Système selon l'une des revendications précédentes, dans lequel le capteur ou le dispositif d'horizon artificiel est adapté en outre pour déterminer, en fonction des données de mouvement du véhicule, une assiette dudit véhicule, le dispositif d'horizon artificiel étant adapté en outre pour générer l'image d'horizon artificiel en fonction en outre de ladite l'assiette du véhicule.

11. Système selon l'une des revendications précédentes, dans lequel l'image d'horizon artificiel comprend une ligne d'horizon artificiel (HA).

12. Système selon l'une des revendications précédentes, dans lequel le dispositif portable de réalité augmentée est adapté en outre pour mesurer des données de mouvement de la tête de l'individu dans un référentiel tridimensionnel du véhicule, le dispositif d'horizon artificiel étant adapté pour générer l'image d'horizon artificiel en fonction en outre desdites données de mouvement de la tête de l'individu.

13. Système selon l'une des revendications précédentes, dans lequel le dispositif portable de réalité augmentée est adapté en outre pour mesurer des données de position de la tête de l'individu par rapport à l'écran (61), le dispositif d'horizon artificiel étant adapté pour générer l'image d'horizon artificiel en fonction en outre desdites données de position de la tête de l'individu par rapport à l'écran et de données relatives à l'écran.

14. Système selon la revendication 13, dans lequel les données relatives à l'écran comprennent des données relatives à des dimensions de l'écran et/ou des données relatives à un contenu multimédia affiché par ledit écran.

15. Système selon la revendication 13 ou 14, dans lequel le dispositif portable de réalité augmentée est adapté en outre pour détecter une présence dudit écran dans le champ de vision de l'individu.

16. Système selon la revendication 15, dans lequel le dispositif d'horizon artificiel est adapté en outre pour, lorsque l'écran est détecté dans le champ de vision de l'individu, générer une image d'horizon artificiel comprenant un motif (MOT) représentatif de l'horizon artificiel et superposable à une portion d'un contour dudit écran, le dispositif portable de réalité augmentée étant adapté pour superposer ledit motif à une image réelle de ladite portion du contour de l'écran.

17. Système selon la revendication 15 ou 16, dans lequel le dispositif d'horizon artificiel est adapté en outre pour, lorsque l'écran est détecté dans le champ de vision de l'individu, générer une image d'horizon artificiel comprenant un motif superposable à une portion de l'écran sous la forme d'un pavage déformé (PAV) en fonction de l'horizon artificiel, le dispositif portable de réalité augmentée étant adapté pour superposer ledit motif à une image réelle de ladite portion de l'écran.

18. Procédé, mis en oeuvre par des moyens informatiques, d'assistance visuelle à un individu , comprenant :
- mesurer (S2) en temps réel, par un capteur (3), des données de mouvement d'un véhicule (59) dans un référentiel terrestre tridimensionnel, et
- générer (S9) sur un écran en temps réel une image d'horizon artificiel par un dispositif d'horizon artificiel (5) en fonction desdites données de mouvement du véhicule et de données mesurées de position de la tête de l'individu par rapport à l'écran,
- afficher en temps réel l'image d'horizon artificiel via un dispositif portable (7) de réalité augmentée, à un individu, porteur du dispositif portable (7), occupant dudit véhicule (59).

19. Programme informatique comprenant des instructions pour la mise en oeuvre du procédé selon la revendication 18, lorsque lesdites instructions sont exécutées par au moins un processeur (23, 37, 53).

## Patentansprüche

1. System (2) zur visuellen Unterstützung eines Individuums, das an Kinetose leidet, beinhaltend:
- einen Sensor (3), der dazu konfiguriert ist, Bewegungsdaten eines Fahrzeugs (59) in einem dreidimensionalen terrestrischen Bezugssystem in Echtzeit zu messen,
- eine Vorrichtung für einen künstlichen Horizont (5), die dazu angepasst ist, auf einem Bildschirm ein Bild mit künstlichem Horizont in Abhängigkeit von den Bewegungsdaten des Fahrzeugs und von gemessenen Positionsdaten des Kopfes des Individuums in Bezug auf den Bildschirm in Echtzeit zu erzeugen, und
- eine tragbare Augmented-Reality-Vorrichtung (7), die dazu angepasst ist, einem Individuum, das die tragbare Vorrichtung trägt und Insasse des Fahrzeugs ist, das Bild mit künstlichem Horizont in Echtzeit anzuzeigen.

2. System nach Anspruch 1, wobei die tragbare Augmented-Reality-Vorrichtung eine Augmented-Reality-Brille (41) oder eine Augmented-Reality-Maske (41) beinhaltet.

3. System nach Anspruch 1 oder 2, wobei die Vorrichtung für einen künstlichen Horizont dazu angepasst ist, das Bild mit künstlichem Horizont ferner in Abhängigkeit von einer Kategorie des Fahrzeugs zu erzeugen, wobei die Vorrichtung für einen künstlichen Horizont somit für eine oder mehrere der folgenden Fahrzeugkategorien konfiguriert sein kann: Automobil, Zug, Flugzeug oder Schiff.

4. System nach einem der vorhergehenden Ansprüche, wobei die Vorrichtung für einen künstlichen Horizont dazu angepasst ist, das Bild mit künstlichem Horizont ferner in Abhängigkeit von Daten bezüglich des Individuums zu erzeugen, die eine oder mehrere der folgenden Informationen beinhalten: Alter, Morphologie, Sehkraft und Grad der Empfindlichkeit gegenüber Kinetose.

5. System nach einem der vorhergehenden Ansprüche, wobei der Sensor ferner dazu konfiguriert ist, Geolokalisierungsdaten des Fahrzeugs zu sammeln, wobei die Vorrichtung für einen künstlichen Horizont oder der Sensor ferner dazu angepasst ist, basierend auf den Geolokalisierungsdaten des Fahrzeugs Bewegungsdaten des Fahrzeugs vorherzusagen.

6. System nach einem der vorhergehenden Ansprüche, das eine Datenbank (11) beinhaltet, die dazu konfiguriert ist, eine oder mehrere Fahrten des Fahrzeugs zu speichern, wobei jede Fahrt innerhalb der Datenbank mit einem oder mehreren Bildern mit künstlichem Horizont assoziiert ist.

7. System nach Anspruch 6, wobei der Sensor ferner dazu konfiguriert ist, Geolokalisierungsdaten des Fahrzeugs zu sammeln, und wobei die Vorrichtung für einen künstlichen Horizont ferner dazu angepasst ist, in Abhängigkeit von den Bewegungsdaten und den Geolokalisierungsdaten des Fahrzeugs eine aktuelle Fahrt des Fahrzeugs zu bestimmen und die aktuelle Fahrt mit der oder den Fahrten, die in der Datenbank gespeichert sind, zu vergleichen, wobei die Vorrichtung für einen künstlichen Horizont ferner dazu angepasst ist:
- wenn die aktuelle Fahrt bereits in der Datenbank gespeichert ist, das Bild mit künstlichem Horizont in Abhängigkeit von dem oder den Bildern mit künstlichem Horizont, die innerhalb der Datenbank mit der aktuellen Fahrt assoziiert sind, zu erzeugen,
- andernfalls die aktuelle Fahrt und das oder die auf der aktuellen Fahrt erzeugten Bilder mit künstlichem Horizont in der Datenbank zu speichern.

8. System nach einem der vorhergehenden Ansprüche, wobei der Sensor Folgendes beinhaltet:
- mindestens einen Beschleunigungsmesser (13A, 13B, 13C), der dazu konfiguriert ist, Daten bezüglich einer Beschleunigung des Fahrzeugs in dem dreidimensionalen terrestrischen Bezugssystem zu messen, und
- mindestens ein Gyrometer (17A, 17B, 17C), das dazu konfiguriert ist, Daten bezüglich einer Winkelgeschwindigkeit des Fahrzeugs in dem dreidimensionalen terrestrischen Bezugssystem zu messen, wobei die Bewegungsdaten des Fahrzeugs die Daten bezüglich der Beschleunigung und der Winkelgeschwindigkeit des Fahrzeugs beinhalten.

9. System nach einem der vorhergehenden Ansprüche, wobei der Sensor oder die Vorrichtung für einen künstlichen Horizont ferner dazu angepasst ist, in Abhängigkeit von den Bewegungsdaten des Fahrzeugs eine Rotation des Fahrzeugs zu bestimmen, wobei die Vorrichtung für einen künstlichen Horizont ferner dazu angepasst ist, das Bild mit künstlichem Horizont ferner in Abhängigkeit von der Rotation des Fahrzeugs zu erzeugen.

10. System nach einem der vorhergehenden Ansprüche, wobei der Sensor oder die Vorrichtung für einen künstlichen Horizont ferner dazu angepasst ist, in Abhängigkeit von den Bewegungsdaten des Fahrzeugs eine Neigungslage des Fahrzeugs zu bestimmen, wobei die Vorrichtung für einen künstlichen Horizont ferner dazu angepasst ist, das Bild mit künstlichem Horizont ferner in Abhängigkeit von der Neigungslage des Fahrzeugs zu erzeugen.

11. System nach einem der vorhergehenden Ansprüche, wobei das Bild mit künstlichem Horizont eine Linie eines künstlichen Horizonts (HA) beinhaltet.

12. System nach einem der vorhergehenden Ansprüche, wobei die tragbare Augmented-Reality-Vorrichtung ferner dazu angepasst ist, Bewegungsdaten des Kopfes des Individuums in einem dreidimensionalen terrestrischen Bezugssystem des Fahrzeugs zu messen, wobei die Vorrichtung für einen künstlichen Horizont dazu angepasst ist, das Bild mit künstlichem Horizont ferner in Abhängigkeit von den Bewegungsdaten des Kopfes des Individuums zu erzeugen.

13. System nach einem der vorhergehenden Ansprüche, wobei die tragbare Augmented-Reality-Vorrichtung ferner dazu angepasst ist, Positionsdaten des Kopfes des Individuums in Bezug auf den Bildschirm (61) zu messen, wobei die Vorrichtung für einen künstlichen Horizont dazu angepasst ist, das Bild mit künstlichem Horizont ferner in Abhängigkeit von den Positionsdaten des Kopfes des Individuums in Bezug auf den Bildschirm und von Daten bezüglich des Bildschirms zu erzeugen.

14. System nach Anspruch 13, wobei die Daten bezüglich des Bildschirms Daten bezüglich Maßen des Bildschirms und/oder Daten bezüglich eines durch den Bildschirm angezeigten Multimedia-Inhalts beinhalten.

15. System nach Anspruch 13 oder 14, wobei die tragbare Augmented-Reality-Vorrichtung ferner dazu angepasst ist, ein Vorhandensein des Bildschirms in dem Sichtfeld des Individuums zu detektieren.

16. System nach Anspruch 15, wobei die Vorrichtung für einen künstlichen Horizont ferner dazu angepasst ist, wenn der Bildschirm in dem Sichtfeld des Individuums detektiert wird, ein Bild mit künstlichem Horizont zu erzeugen, das ein Muster (MOT) beinhaltet, das für den künstlichen Horizont repräsentativ ist und über einen Abschnitt einer Kontur des Bildschirms gelegt werden kann, wobei die tragbare Augmented-Reality-Vorrichtung dazu angepasst ist, das Muster über ein reales Bild des Abschnitts der Kontur des Bildschirms zu legen.

17. System nach Anspruch 15 oder 16, wobei die Vorrichtung für einen künstlichen Horizont ferner dazu angepasst ist, wenn der Bildschirm in dem Sichtfeld des Individuums detektiert wird, ein Bild mit künstlichem Horizont zu erzeugen, das ein Muster (MOT) beinhaltet, das in Form einer in Abhängigkeit von dem künstlichen Horizont verformten Kachelung (PAV) über einen Abschnitt des Bildschirms gelegt werden kann, wobei die tragbare Augmented-Reality-Vorrichtung dazu angepasst ist, das Muster über ein reales Bild des Abschnitts des Bildschirms zu legen.

18. Verfahren, umgesetzt durch Computermittel, zur visuellen Unterstützung eines Individuums, beinhaltend:
- Messen (S2), in Echtzeit, durch einen Sensor (3), von Bewegungsdaten eines Fahrzeugs (59) in einem dreidimensionalen terrestrischen Bezugssystem und
- Erzeugen (S9), in Echtzeit auf einem Bildschirm, eines Bildes mit künstlichem Horizont durch eine Vorrichtung für einen künstlichen Horizont (5) in Abhängigkeit von den Bewegungsdaten des Fahrzeugs und gemessenen Positionsdaten des Kopfes des Individuums in Bezug auf den Bildschirm,
- Anzeigen, in Echtzeit, einem Individuum, das die tragbare Vorrichtung (7) trägt und Insasse des Fahrzeugs (59) ist, des Bildes mit künstlichem Horizont mit Hilfe einer tragbaren Augmented-Reality-Vorrichtung (7).

19. Computerprogramm, das Anweisungen zur Umsetzung des Verfahrens nach Anspruch 18 beinhaltet, wenn die Anweisungen durch mindestens einen Prozessor (23, 37, 53) ausgeführt werden.

## Claims

1. System (2) for providing visual assistance to an individual suffering from kinetosis, comprising:
- a sensor (3) configured to measure, in real time, motion data of a vehicle (59) in a three-dimensional terrestrial reference frame,
- an artificial-horizon device (5) configured to generate, in real time, an artificial-horizon image on a screen depending on said vehicle motion data and on measured data on the position of the head of the individual with respect to the screen, and
- a wearable augmented-reality device (7) configured to display, in real time, the artificial-horizon image to an individual, wearing said wearable device, occupying said vehicle.

2. System according to Claim 1, wherein the wearable augmented-reality device comprises augmented-reality glasses (41) or augmented-reality goggles (41).

3. System according to Claim 1 or 2, wherein the artificial-horizon device is configured to generate the artificial-horizon image further depending on a category of the vehicle, the artificial-horizon device thus being able to be configured for one or more of the following vehicle categories: automobile, train, aircraft and boat.

4. System according to any preceding claim, wherein the artificial-horizon device is configured to generate the artificial-horizon image further depending on data relating to the individual comprising one or more of the following information items: age, morphology, visual capacities and degree of sensitivity to kinetosis.

5. System according to any preceding claim, wherein the sensor is further configured to collect vehicle geolocation data, the artificial-horizon device or the sensor further being configured to predict, based on said vehicle geolocation data, vehicle motion data.

6. System according to any preceding claim, comprising a database (11) configured to store one or more vehicle paths, each path being associated, within the database, with one or more artificial-horizon images.

7. System according to Claim 6, wherein the sensor is further configured to collect vehicle geolocation data and wherein the artificial-horizon device is further configured to determine, depending on the vehicle motion data and geolocation data, a current vehicle path and to compare said current path with one or more paths stored in the database, the artificial-horizon device further being configured to:
- if the current path is already stored in the database, generate the artificial-horizon image depending on the one or more artificial-horizon images associated with said current path within the database,
- otherwise, store the current path and the one or more artificial-horizon images generated on said current path in the database.

8. System according to any preceding claim, wherein the sensor comprises:
- at least one accelerometer (13A, 13B, 13C) configured to measure data relating to an acceleration of the vehicle in the three-dimensional terrestrial reference frame, and
- at least one gyrometer (17A, 17B, 17C) configured to measure data relating to an angular velocity of the vehicle in the three-dimensional terrestrial reference frame,
the vehicle motion data comprising said data relating to the acceleration and angular velocity of the vehicle.

9. System according to any preceding claim, wherein the artificial-horizon device or sensor is further configured to determine, depending on the vehicle motion data, a rotation of said vehicle, the artificial-horizon device further being configured to generate the artificial-horizon image further depending on said rotation of the vehicle.

10. System according to any preceding claim, wherein the artificial-horizon device or sensor is further configured to determine, depending on the vehicle motion data, an attitude of said vehicle, the artificial-horizon device further being configured to generate the artificial-horizon image further depending on said attitude of the vehicle.

11. System according to any preceding claim, wherein the artificial-horizon image comprises an artificial-horizon line (HA).

12. System according to any preceding claim, wherein the wearable augmented-reality device is further configured to measure data on the motion of the head of the individual in a three-dimensional reference frame of the vehicle, the artificial-horizon device being configured to generate the artificial-horizon image further depending on said data on the motion of the head of the individual.

13. System according to any preceding claim, wherein the wearable augmented-reality device is further configured to measure data on the position of the head of the individual with respect to the screen (61), the artificial-horizon device being configured to generate the artificial-horizon image further depending on said data on the position of the head of the individual with respect to the screen and on data relating to the screen.

14. System according to Claim 13, wherein the data relating to the screen comprise data relating to dimensions of the screen and/or data relating to multimedia content displayed by said screen.

15. System according to Claim 13 or 14, wherein the wearable augmented-reality device is further configured to detect a presence of said screen in the field of view of the individual.

16. System according to Claim 15, wherein the artificial-horizon device is further configured to, when the screen is detected in the field of view of the individual, generate an artificial-horizon image comprising a pattern (MOT) that is representative of the artificial horizon and superposable on a segment of an outline of said screen, the wearable augmented-reality device being configured to superpose said pattern on a real image of said segment of the outline of the screen.

17. System according to Claim 15 or 16, wherein the artificial-horizon device is further configured to generate, when the screen is detected in the field of view of the individual, an artificial-horizon image comprising a pattern that is superposable on a segment of the screen in the form of a tiling (PAV) that is deformed depending on the artificial horizon, the wearable augmented-reality device being configured to superpose said pattern on a real image of said segment of the screen.

18. Method, implemented by computing means, for providing visual assistance to an individual, comprising:
- measuring (S2), in real time, by means of a sensor (3), motion data of a vehicle (59) in a three-dimensional terrestrial reference frame, and
- generating (S9) on a screen, in real time, an artificial-horizon image by means of an artificial-horizon device (5), depending on said vehicle motion data and on measured data on the position of the head of the individual with respect to the screen,
- displaying, in real time, the artificial-horizon image via a wearable augmented-reality device (7), to an individual, wearing the wearable device (7), occupying said vehicle (59).

19. Computer program comprising instructions for implementing the method according to Claim 18, when said instructions are executed by at least one processor (23, 37, 53) .
